# EUROPEAN PATENT SPECIFICATION

(11) **EP 3 100 545 B1**
(45) Date of publication and mention of the grant of the patent: **20.11.2019**
(21) Application number: 14705728.5
(22) Date of filing: 06.02.2014
(51) Int. Cl.: H04W 72/02, H04W 74/08, H04W 84/20

(54) **INTER-GROUP CONTROL OF SEMI-PERSISTENT CHANNEL OCCUPATION FOR DEVICE-TO-DEVICE (D2D) WIRELESS COMMUNICATIONS**
INTERGRUPPALE STEUERUNG DER SEMIPERSISTENTEN KANALBESETZUNG FÜR VORRICHTUNG-ZU-VORRICHTUNG (D2D)-DRAHTLOSKOMMUNIKATIONEN
COMMANDE ENTRE GROUPES D'OCCUPATION DE CANAL SEMI-PERSISTENTE POUR DES COMMUNICATIONS SANS FIL DISPOSITIF À DISPOSITIF (D2D)

(30) Priority: 28.01.2014 WO PCT/EP2014/051604
(43) Date of publication of application: 07.12.2016
(73) Proprietor: Nokia Solutions and Networks Oy, 02610 Espoo (FI)
(72) Inventor: VAN PHAN, Vinh, 90100 Oulu (FI); YU, Ling, 90650 Oulu (FI); HORNEMAN, Kari Veikko, 90800 Oulu (FI)
(74) Representative: Nokia EPO representatives
(86) International application number: PCT/EP2014/052317
(87) International publication number: WO 2015/113645

(56) References cited:
- WO-A1-2010/049801
- WO-A1-2010/082084
- WO-A1-2013/049826
- US-A1- 2014 003 414
- NOKIA ET AL: "D2D Communication without network coverage", [Online] 28 September 2013 (2013-09-28), 3GPP DRAFT; R1-134535, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, XP050717638, Retrieved from the Internet: URL:http://www.3gpp.org/ftp/tsg_ran/WG1_RL 1/TSGR1_74b/Docs/> [retrieved on 2013-09-28] the whole document

## Description

### TECHNICAL FIELD

This description relates to wireless networks.

### BACKGROUND

A communication system may be a facility that enables communication between two or more nodes or devices, such as fixed or mobile communication devices. Signals can be carried on wired or wireless carriers.

An example of a cellular communication system is an architecture that is being standardized by the 3^{rd} Generation Partnership Project (3GPP). A recent development in this field is often referred to as the long-term evolution (LTE) of the Universal Mobile Telecommunications System (UMTS) radio-access technology. E-UTRA (evolved UMTS Terrestrial Radio Access) is the air interface of 3GPP's Long Term Evolution (LTE) upgrade path for mobile networks. In LTE, base stations, which are referred to as enhanced Node Bs (eNBs), provide wireless access within a coverage area or cell. In LTE, mobile devices, or mobile stations are referred to as user equipments (UE). LTE has included a number of improvements or developments.

NOKIA ET AL: "D2D Communication without network coverage", 3GPP DRAFT; R1-134535, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX;FRANCE discloses that semi-persistent resource allocation for D2D communication groups needs to be considered in RAN1. In order to support the semi-persistent resource allocation, CH needs to support the simple scheduling functions such as providing resource configuration (for example including providing frame structure, frame number) and semi-static configuration of group resources. When one UE within one group wishes to transmit data to other members, firstly it will send scheduling request to CH or to a resource allocation head within the group, or contention based access is used within the group.

WO 2013/049826 discloses a method including wirelessly communicating with one or more stations that are partitioned into one or more groups. The method also includes generating a message that identifies one or more time periods during which each station of a first group of the one or more groups is permitted to contend for a communication channel or restricted from contending for the communication channel. The method further includes transmitting the message.

US 2014/003414 discloses receiving by a wireless terminal device, a first message from an access point, the first message comprising information indicating a plurality of restricted access windows, each allocated for a different group of terminal devices associated to a wireless network managed by the access point; receiving by the terminal device, a second message from the access point, within a restricted access window of the plurality of restricted access windows, the restricted access window allocated to a group of terminal devices of which the terminal device is a member, the second message comprising information indicating that a communications channel is available; and determining by the terminal device, based on the second message, that the communications channel is not occupied by hidden ones of the terminal devices associated to the network.

WO 2010/082084 discloses that a resource of a network is granted to a group designated for device-to-device communications. The group then determines how the resource allocation is utilized to support the communication session and allocates the resource among the user equipment within the group independently of the base station. Further, a user equipment pair in the group determines transmit/receive (Tx/Rx) timeslot configuration to allow TDD mode operations, and further configure the modulation and coding for the device-to-device connection, and error control scheme for the pair via control signaling independently from the group.

WO 2010/049801 discloses an apparatus, system and method to dynamically manage an allocation of communication resources for direct device-to-device communications between a plurality of wireless communication devices in a wireless communication system. In one embodiment, the apparatus (410) includes a communication resource allocator (420) configured to: (1) select a master communication device of a plurality of wireless communication devices that form a device-to-device group, (2) provide an allocation of communication resources for device-to-device group that facilitate direct device-to-device communications there between. The apparatus (410) also includes a message generator (430) configured to assemble messages that include the allocation of the communication resources.

### SUMMARY

According to an example implementation, a method comprising: determining, by a first user device of a first user group, that a first wireless channel of a device-to-device (D2D) wireless network is occupied by another user of the first user group, and obtaining, by the first user device via an intra-group contention window, the first wireless channel for at least one subsequent user holding period; and/or determining, by the first user device of the first user group, that a second wireless channel of a device-to-device (D2D) wireless network is free or unoccupied, and obtaining, by the first user device via the inter-group contention window, the second wireless channel for a group channel holding period for the first user group; and controlling sending, by the first user device via the first and/or second wireless channel during the group channel holding period, channel status information indicating that the first and/or second wireless channel is busy or occupied and, when the second wireless channel is obtained, information indicating that the first user group is occupying the second wireless channel.

According to an example implementation, a computer program product for a computer is provided and includes software code portions for performing any of the steps described herein, when said product is run on the computer.

According to an example implementation, an apparatus is provided that comprises: means for determining, by a first user device of a first user group, that a first wireless channel of a device-to-device (D2D) wireless network is occupied by another user of the first user group; means for obtaining, by the first user device via an intra-group contention window, the first wireless channel for at least one subsequent user holding period; means for determining, by the first user device of the first user group, that a second wireless channel of a device-to-device (D2D) wireless network is free or unoccupied; means for obtaining, by the first user device via the inter-group contention window, the second wireless channel for a group channel holding period for the first user group, and means for controlling sending, by the first user device via the wireless channel during the group channel holding period, channel status information indicating that the first and/or second wireless channel is busy or occupied and, when the second wireless channel is obtained, information indicating that the first user group is occupying the second wireless channel.

The details of one or more examples of implementations are set forth in the accompanying drawings and the description below. Other features will be apparent from the description and drawings, and from the claims.

### BRIEF DESCRIPTION OF THE DRAWINGS

FIG. 1 is a block diagram of a wireless network 130 according to an example implementation.
FIG. 2 is a diagram illustrating channel(s) that may be shared among multiple user groups according to an example implementation.
FIG. 3 is a timing diagram illustrating operation of user devices among multiple user groups according to an example implementation.
FIG. 4 is a flow chart illustrating operation of a user device according to an example implementation.
FIG. 5 is a flow chart illustrating operation of a user device according to an example implementation.
FIG. 6 is a flow chart illustrating operation of a user device according to an example implementation.
FIG. 7 is a flow chart illustrating operation of a user device according to an example implementation.
FIG. 8 is a block diagram of a wireless device (e.g., user device, BS or other wireless device) 800 according to an example implementation.

### DETAILED DESCRIPTION

Various example implementations are provided to improve efficiency of wireless resource usage such as in a device-to-device (D2D) or proximity service (ProSe) wireless network. According to an example implementation, a technique may include determining, by a first user device of a first user group, that a wireless channel of a device-to-device (D2D) wireless network is free or idle, obtaining, by the first user device via an inter-group contention window, the wireless channel for a group channel holding period for the first user group, and controlling sending, by the first user device via the wireless channel during the group channel holding period, a channel status information including at least channel status information indicating that the wireless channel is busy or occupied and information indicating that the first user group is occupying the wireless channel.

According to another example implementation, a technique may include determining, by a first user device of a first user group of a device-to-device (D2D) wireless network, whether a wireless channel is occupied by another user of the first user group, obtaining the channel via an intra-group contention window if the wireless channel is occupied by another user of the first user group, and otherwise, obtaining the channel via an inter-group contention window if the wireless channel is not occupied by another user the first user group.

According to another example implementation, a technique may include controlling receiving a channel request from one or more requesting user devices during an inter-group contention window for a channel of a device-to-device wireless network, determining that a first requesting user device obtained the channel via contention for a next channel holding period, and controlling sending a response to identify the first requesting user device as obtaining the channel.

According to yet another example implementation, a technique may include controlling receiving, for one or more channels, information that identifies a user group that holds or occupies a current group channel holding period or information that identifies a user group that has been selected to hold or occupy a next group channel holding period, for a channel of a device-to-device (D2D) wireless network, controlling broadcasting a channel occupancy information for one or more channels including the channel occupancy information identifying whether the channel is free or occupied, and information identifying a user group that is occupying the channel if the channel is occupied.

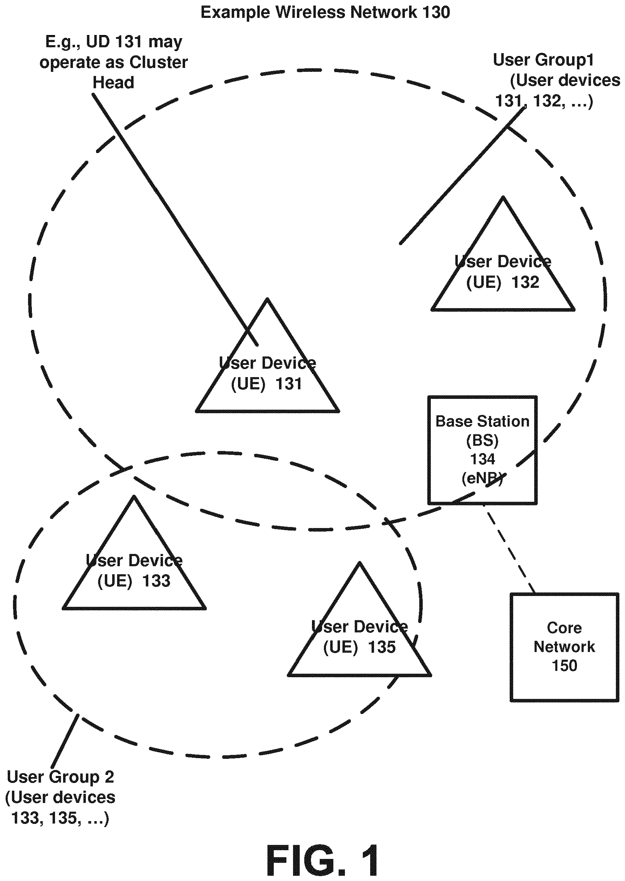

FIG. 1 is a block diagram of a wireless network 130 according to an example implementation. In the wireless network 130 of FIG. 1, user devices 131, 132, 133 and 135, which may also be referred to as user equipments (UEs), may be connected (and in communication) with a base station (BS) 134, which may also be referred to as an enhanced Node B (eNB). At least part of the functionalities of a base station or (e)Node B may be also be carried out by any node, server or host which may be operably coupled to a transceiver, such as a remote radio head. BS 134 provides wireless coverage within a cell 136. Although only four user devices are shown within cell 136 (connected or attached to BS 134), any number of user devices may be provided. BS 134 is also connected to a core network 150 via a S1 interface 151. This is merely one simple example of a wireless network, and others may be used.

A user device (user terminal, user equipment (UE)) may refer to a portable computing device that includes wireless mobile communication devices operating with or without a subscriber identification module (SIM), including, but not limited to, the following types of devices: a mobile station, a mobile phone, a cell phone, a smartphone, a personal digital assistant (PDA), a handset, a device using a wireless modem (alarm or measurement device, etc.), a laptop and/or touch screen computer, a tablet, a phablet, a game console, a notebook, and a multimedia device, as examples. It should be appreciated that a user device may also be a nearly exclusive uplink only device, of which an example is a camera or video camera loading images or video clips to a network.

In LTE, core network 150 may be referred to as Evolved Packet Core (EPC), which may include a mobility management entity (MME) which may handle or assist with mobility/handover of user devices between BSs, one or more gateways that may forward data and control signals between the BSs and packet data networks or the Internet, and other control functions or blocks.

According to an example implementation, user devices 131,132, 133 and 135 may be in proximity to each other. User device 131 and 132 may be part of user group 1, while user devices 133 and 135 may be part of user group 2. One of the user devices, such as user device 131 may also operate as a multi-user group cluster head. A cluster head may transmit synchronization signals, and may also transmit a channel occupation (or channel occupancy) information for one or more channels including, for each channel, identifying whether the channel is free or occupied, and identify the user group that is occupying the channel and/or the user device ID of the user device that is occupying the channel if the channel is occupied, for example.

According to an example implementation, the user devices of user group 1 may operate in a device-to-device (D2D) mode in which user devices may directly communicate with each other. Similarly, the user devices for user group 2 may also operate in a D2D mode. Thus, in a D2D mode, communications may occur directly between user devices, rather than passing through BS 134, for example. D2D communications may be performed, for example, in the event of a breakage of S1 interface 151 or other network failure. Alternatively, a user group may be established and the user devices of such user group may perform D2D communications even when no such network failure has occurred, such as, for example, to offload traffic from the network (BS 134 and core network 150) and/or to allow user devices to communicate directly in a D2D mode.

According to an example implementation, one or more semi-persistent resources (e.g., wireless channel(s)) may be allocated, or made available for use, by the various user groups, including user group 1 and user group 2. Such resource or channel allocation may be considered persistent since it may be allocated to or occupied by a user group for an extended period of time (e.g., minutes) and does not typically expire, for example.

According to an example implementation, multiple user groups may share multiple resources (multiple wireless channels). Furthermore, according to an example implementation, once a channel has been obtained by or is occupied by a user group (or a user within the user group), then user devices within the occupying user group, e.g., when operating in a D2D mode of operation, may use/share the channel up to a group channel holding period. Also, within a group channel holding period for a channel, user devices within an occupying user group (that occupies the channel) may hold or occupy the channel up to a user channel holding period. A group channel holding period (e.g., minutes) may be much longer than a user channel holding period (e.g., tens or hundreds or milliseconds). Therefore, according to an example implementation, once a user device obtains a free or available channel, the user device obtains the channel for itself (up to a user channel holding period) and also obtains the channel on behalf of (or for) its user group (e.g., allowing users of that user group to occupy or hold the channel up to a group channel holding period). Because of the shared nature of such resource or channel, when one user device is transmitting, 1 or more (or even all) of the other user devices within the same user group and even other user devices within other user groups may receive the transmitted signal via the shared channel. Thus, such a transmission may be considered as a broadcast transmission, or a 1:M transmission in the D2D mode.

According to one example implementation, a distributed resource allocation technique may be used, where user devices may contend for the right to occupy or hold the channel. A variety of distributed resource access techniques may be used, such as contention-based access techniques where user devices contend for the right to control the channel or the right to transmit on the channel. One example of a distributed resource access technique that may be used may include a Carrier Sense Multiple Access (CSMA) technique in which a node or user device first senses the channel or medium to determine if another node or user device is transmitting. If the channel is idle, the user device may begin transmitting. If the channel or medium is busy, the user device waits for the channel to become idle. Thus, CSMA may be employ a listen-before-talk or sense-before-transmit technique for user devices to contend for the right to transmit a packet. A number of CSMA variations may be employed, for example, such as a CSMA/collision detection (CSMA/CD) in which performance may be improved by a user device terminating its transmission on the channel as soon as a collision is detected. A CSMA/collision avoidance (CSMA/CA) technique may be used where, for example, a user device may first transmit a request to send (RTS), and then either detect idle channel or wait for a clear to send (CTS) signal, before transmitting on the channel. If the channel is busy, or if no CTS signal is received, then the user device may wait or backoff a random period of time, before sensing the channel and transmitting if channel is idle or upon receipt of a CTS signal. These are just a few example distributed resource allocation techniques, and any resource allocation technique may be used by a user device to obtain control of a channel (or obtain the right to transmit on the channel).

According to an example implementation, as noted above, a channel may be divided into group channel holding periods that allow user devices of a group to share or use the channel within such group channel holding period. Each group channel holding period may include multiple (or a plurality of) user channel holding periods where a user device may hold or occupy the channel. According to an example implementation, holding or occupying the channel by a user device may allow the holding user device to transmit data and control signals on the channel, schedule resources for contention windows to allow other user devices to contend to transmit data or signals, and otherwise control the channel for the user channel holding period. For example, once a user device obtains (or holds) the shared channel, the (holding) user device may transmit data via the channel to other user devices. The user device that holds the channel may also schedule opportunities or windows during its channel holding period that allow one or more other user devices of the user group to transmit (or contend for the right to transmit) during the channel holding period, for example.

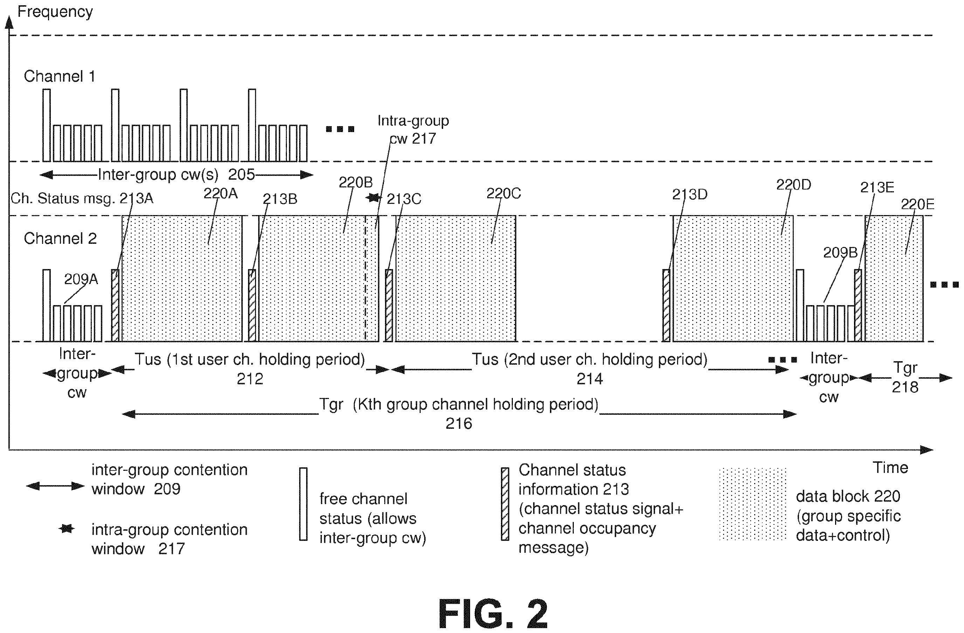

FIG. 2 is a diagram illustrating channel(s) that may be shared among multiple user groups according to an example implementation. According to an example implementation, one or more contention windows (or contention periods) may be provided for one or more channels. A contention window may be a period of time where one or more user devices may contend for the channel. Also, for example, two different types of contention windows may be provided, including an inter-group contention window and an intra-group contention window. According to an example implementation, an inter-group contention window, e.g., provided between group channel holding periods, may allow users of different groups (or users, regardless of their group membership) to contend for the channel (or contend for a next group channel holding period). Also, an intra-group contention window may also be provided within a group channel holding period to allow users within an occupying group to contend for or obtain the channel.

Referring to FIG. 2, two example channels are shown, including channel 1 and channel 2. As shown in FIG. 2, initially both channel 1 and channel 2 are free (channel status of free or idle). According to an example implementation, an inter-group contention window may be provided for a channel when a channel has a free status or idle status. For example, an inter-group contention window(s) 205 is provided for channel 1. Also, in the example shown in FIG. 2, an inter-group contention window (cw) 209A is provided just prior to a Kth group channel holding period 216 (having a period of Tgr).

As shown in FIG. 2, the free channel status and the inter-group contention window 205 continues, and no user device has obtained channel 1. Channel 1 is free, and user devices of different user groups may contend or obtain channel 1 using the inter-group contention window 205.

With respect to channel 2, one or more user devices, from different user groups, contend for channel 2 during the inter-group contention window 209A. One of the user devices, e.g., user device 1 of user group 1, may contend and obtain the channel 2 during contention window (cw) 209A. By obtaining channel 2 during the inter-group cw 209A, the user device 1 obtains the channel for itself to occupy or hold (or control) the channel during the 1st user channel holding period 212 (having a period Tus). In addition, by obtaining channel 2 via the inter-group cw 209A, the user device 1 (a member of user group 1) also obtains channel 2 on behalf of (or for) its user group (e.g., for user group 1), thereby allowing one or more other user devices of user group 1 to subsequently occupy or hold the channel 1 during an associated user channel holding period (e.g., 214) within the group channel holding period 216. As shown in FIG. 2, if channel 2 is obtained by user group 1 (or by a user device 1 of user group 1), then user device 1 may hold or occupy the channel during an initial or 1st user channel holding period 212. Then, another user (e.g., user device 2) of user group 1 may obtain, via intra-group contention window 217, channel 2 for a second (or 2^{nd}) user channel holding period 214 within group channel holding period 216, for example. While only two user channel holding periods (e.g., user channel holding periods 212 and 214) are shown in the Kth group channel holding period 216, any number of user channel holding periods may be provided within any of the group channel holding periods. Although not shown, additional user devices of user group 1 may contend during additional intra-group contention windows (not shown) to obtain the channel for a subsequent user channel holding period within the group channel holding period 216.

Each group channel holding period may have a length or period (or maximum period) of Tgr, and each user channel holding period may have a length or period (or maximum period) of Tus. For example, a group channel holding period may include tens or hundreds, or even thousands of user channel holding periods, depending on the length of each. Both the group channel holding period and the user channel holding period may be considered a semi-persistent resource allocation since the channel is allocated for a significant period of time, and not just for transmission of 1 packet or a few packets, for example. Only two example group channel holding periods 216, 218 are shown in FIG. 2, but any number may be provided. While only two user channel holding periods, 212, 214, are shown within the Kth group channel holding period 216 in FIG. 2, a group channel holding period may include any number of user channel holding periods.

User device 1 may obtain channel 2 via inter-group contention window 209A. According to an example implementation, after user device 1 (and user group 1) obtains channel 2 (and now channel 2 is occupied), the inter-group contention window 209A will not appear again on channel 2 (while the channel is occupied) until the next free (non-occupied) channel status for channel 2 at inter-group contention window (cw) 209B (e.g., after the end of Kth group channel holding period 216). In other words, according to an example implementation, an inter-group contention window 209 is not provided on a channel while that channel is occupied, but only when the channel is free (e.g., free or non-occupied channel status). For example, an inter-group contention window may be provided whenever the channel is free.

Also, after obtaining channel 2, user device 1 may transmit (e.g., may periodically transmit) a channel status information 213 (such as channel status information 213A), which may include a channel status signal indicating whether the channel 2 is busy (or occupied) or free, and/or a channel occupancy message that identifies the user group (e.g., information identifying user group 1) that is occupying the channel (channel 2), a user device ID (e.g., identifying user device 1), a service ID, and a profile. For example, the service ID and profile may indicate what kinds of applications and services, what kinds of transmission modes or configurations are used or employed on the channel or by user device(s) that have obtained the channel. This information, for example, may allow other user devices to discover the user group and other information to assist other user devices of the user group to receive and use or obtain the channel. Other fields may also be included. The channel status information, signal and/or message may include a series of signals or bits, similar to a preamble, for example. The channel status information, signal and/or message may include a first set of bits or signals to indicate a free channel status, and a second set of signals or bits to indicate a busy or occupied channel status. Alternatively, the channel status information may be provided as one of the fields in the channel occupancy message. Thus, for example, other user devices may first receive a channel status signal to determine if a channel is busy (based on the channel status signal indicating free or occupied channel status), and if the channel is busy, the user device may receive a channel occupancy message to determine the user group that is occupying the channel based on the user group ID within the channel occupancy message.

According to an example implementation, the channel status information 213 is transmitted (by the occupying user device) only when the channel is occupied. Thus, in such an example implementation, the channel status information 213 typically would not be transmitted when the channel is free, for example. The channel status information 213 may be periodically transmitted (e.g., every X frames, every 10 ms, every Y ms). For example, as shown in FIG. 2 for channel 2, channel status information 213 may be transmitted as channel status information 213A, 213B, 213C, 213D and 213E as examples.

A channel status information 213 may be transmitted by an occupying user device to notify user devices (both user devices within the same user group as the occupying user device, and user devices in other user groups) of: 1) the channel status (e.g., busy/occupied, or free), and 2) if channel status is occupied, then to identify at least the user group that is occupying the channel.

Therefore, for example, the channel status information 213 may allow other user devices to determine if a channel is occupied/busy or not, and then to determine which user group is occupying the channel. For example, if no channel status information is transmitted, and the channel is idle, this may indicate a free channel status, and any user devices (of any user group) may obtain the channel via the inter-group contention window 209. Likewise, if the channel status information 213 indicates that user group 1 is occupying the channel, then user devices from other user groups may obtain the channel only through an inter-group contention window 209 (e.g., inter-group cw 209A, 209B...). This is because the inter-group contention window 209 is for user devices of any group, while the intra-group contention window 217 is reserved for user devices to contend or obtain the channel that are members of the same user group as the currently occupying user device. Once a channel is occupied, user devices of groups that are not occupying the channel should refrain from obtaining the channel via the intra-group cw (contention window) 217, and should only use the inter-group cw 209.

If a user device 2 of user group 1 (same group as the currently occupying user device 1) receives the channel status information 213 indicating that the channel is occupied by user group 1, then user device 2 may obtain the channel via an intra-group contention window 217, for example. According to an example implementation, the intra-group cw 217 may include a contention portion of the cw 217 for receiving contention requests (or channel requests) from other users, and a response portion to allow the currently occupying user device to provide a contention response to indicate to other user devices which user device has obtained the channel via contention for the next user channel holding period.

According to an example implementation, a contention window may use different structures to allow channel requests to be transmitted, and, for example, a response or feedback to be provided to contending user devices indicating if the channel request was successful (e.g., a response indicating whether or not a requesting user device obtained the channel). According to an example implementation, a contention window (either intra-group cw 217 or inter-group cw 209) may include a contention portion that allows one or more user devices to submit channel requests or contention requests, and a response (or feedback) portion that allows another user device to provide a response that indicates which requesting user device obtained the channel (e.g., the channel request for such identified user device was accepted and/or the user device successfully contended for the channel) and which (if any) requesting user devices did not obtain the channel via contention (e.g., channel request was rejected). Thus, the contention portion (or request portion) of the contention window provides resources to allow user devices to submit channel requests for the channel, and the response portion of the contention window may allow feedback to identify which of the requesting user devices obtained the channel.

According to an example implementation, an example contention window structure may include multiple time slots, or multiple subframes, where a sub-set of the subframes may be for the contention (or request) portion of the cw, and a remaining subset of the subframes may be for the response portion of the cw. According to one illustrative example, a contention window may include (by way of example) 6 subframes, with 3 subframes provided for the contention portion, and 3 subframes for the response portion of the cw. In this example, the subframes may be used as follows to allow three user devices to contend for a channel:
Subframe 1 - channel request from user device 1
Subframe 2 - channel request from user device 2
Subframe 3 - channel request from user device 3
Subframe 4 - response to subframe 1 channel request (from user device 1)
Subframe 5 - response to subframe 2 channel request (from user device 2)
Subframe 6 - response to subframe 3 channel request (from user device 3)

A response to a channel request may, for example, indicate whether or not a requesting user device has obtained the channel, and information identifying the user device (e.g., user device ID) and user group (e.g., user group ID) to which the response is directed, for example.

According to an example implementation, one or more (group) data blocks 220 may be provided within each user channel holding period. The data block 220 may indicate a time period when the occupying (or holding) user device may transmit data (user data or control data) on the obtained or allocated channel. For example, a channel status information 213 may be provided between data blocks 220. As an example, channel status information 213A, 213B, 213C, 213D and 213E may be provided between, or alternate with the data blocks 220A, 220B, 220C, 220D, 220E, etc. For example, after a user device obtains channel 2, the user device may transmit the channel status information 213A followed by transmission of data and/or control signals via data block 220A. This transmission sequence of channel status information 213 followed by data block 220 may be repeated one or more times, depending on the length of the user channel holding period, according to an example implementation. Some example control signals that may be transmitted within data block 220 may include a control message to identify channel resources (e.g., subframes or time slots or times) for an intra-group contention window (e.g., 217), which may include resources for a contention portion to allow channel requests to be transmitted by other user devices, and a response portion that may allow the occupying user device to indicate or confirm which user device has obtained the next user channel holding period, for example.

In an example implementation, a user device may contend for a channel by transmitting a signal, such as a channel request or contention request during a contention window. A contention window may be or may include a set of resources (e.g., time slots, subframes, channels) designated (or allocated) for contention based channel access (or contention based resource allocation). One example contention window may include a contention (or request) portion to allow channel requests or contention requests to be transmitted by requesting user devices, and a response portion to allow a user device or other device (e.g., either a currently holding user device for an intra-group contention window, or a cluster head user device in the case of a inter-group contention window) to identify which requesting user device obtained the channel.

For example, user devices may use a CSMA technique, such as CSMA/CD, for example, to contend for the channel. In an example implementation, the intra-group contention windows 217 and/or the inter-group contention windows 209 may be divided into multiple transmission opportunities, to allow different user devices to use different transmission opportunities, e.g., to reduce the probability or likelihood of a collision. Transmission opportunities may be time division multiplexed, frequency division multiplexed, or code division multiplexed. Thus, these different transmission opportunities may be provided by multiplexing these opportunities in time (e.g., different time slots, subframes or symbols for different transmission opportunities), frequency (different carrier frequencies for different transmission opportunities) or by code (different codes for different transmission opportunities). The different transmission opportunities may be assigned to each user device, or a user device may randomly select one of the opportunities to transmit its channel transfer request, e.g., in order to reduce the probability of a collision with another channel transfer request. According to an example implementation, one or more opportunities for transmitting a channel request or a channel transfer request (e.g., a different time slot or symbols, a different frequency, or a different code) may be assigned to user devices or identified by the user device that currently holds the channel) within a field of a control signal that is transmitted by the currently occupying user device. According to an example implementation, the transmission opportunities may depend on the capabilities of the user device that currently holds or occupies the channel because that occupying user device may perform the resolution or identify (or confirm) another user device that obtains the channel via contention.

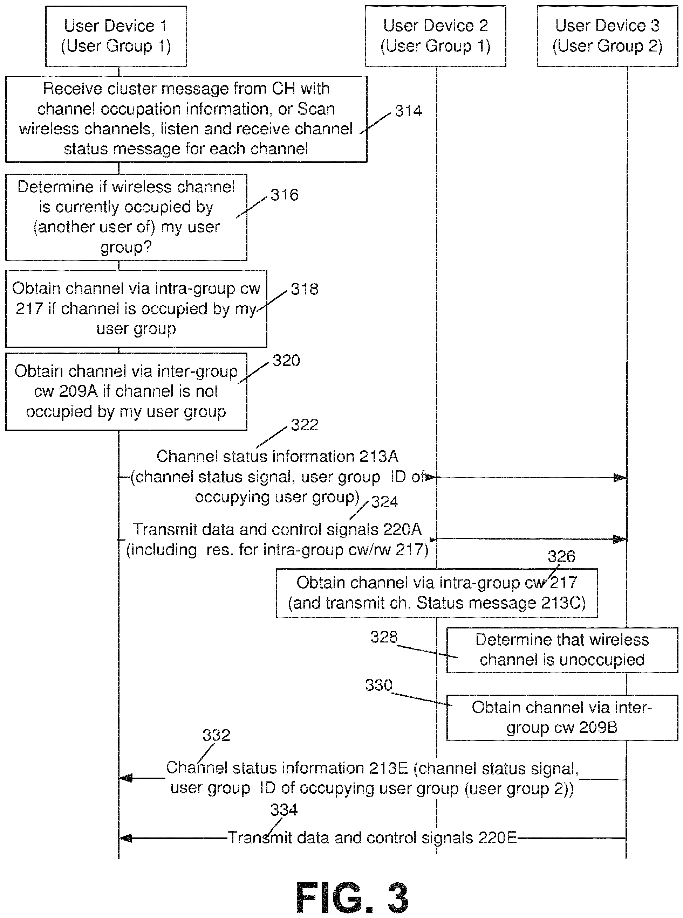

FIG. 3 is a timing diagram illustrating operation of user devices among multiple user groups according to an example implementation. In FIG. 3, three user devices are shown, including user device 1, user device 2 and user device 3. The example operation of the user devices will be described with reference to both FIGs. 2 and 3. Three example user devices are shown in FIG. 3 including a user device 1 (a member of user group 1), a user device 2 (a member of user group 1) and user device 3 (a member of user group 2).

At 314, according to an example implementation, one or more of the user devices (such as user device 1) may receive a cluster message or channel occupancy information from a cluster head. According to an example implementation, the channel occupancy information from a cluster head or other device within a D2D network may identify, for each of a plurality of channels, at least: 1) a channel status (e.g., occupied or free), and 2) information (e.g., user group ID) that identifies a user group (if any) that is currently occupying the channel. Alternatively, each user device may scan and receive channel status information(s) 213 for each of one or more channels to obtain the channel status and user group (if any) that is occupying each channel.

At 316, based on this information, e.g., information obtained via the channel occupancy information broadcast by a cluster head for a D2D network, or by scanning and receiving channel status information(s) 213 for one or more channels, user device 1 (a member of user group 1) may determine whether there is a channel that is currently occupied by another user of user group 1. If there is a channel that is already occupied by user group 1, then user device 1 (as a member of user group 1) should obtain and use such channel (to transmit data) that is already occupied by user group 1, rather than obtaining a new or different channel, e.g., to the extent that such occupied channel sufficiently satisfies the needs of user group 1. In other words, a relatively efficient use of channel resources may be obtained if one channel is allocated to (or occupied by) each user group. And, if the one channel does not meet the needs of the occupying user group, then the user group may obtain and occupy a second channel. If the two channels are not sufficient to meet the needs of the user group, then the user group may obtain a third user channel, etc.

For example, if a first channel is not sufficient for the needs of a user group, the currently occupying user device (e.g., user device 1 of user group 1) may contend (e.g., via inter-group cw) and obtain a second channel. When transmitting a channel status information 213 on the first channel, the user device 1 that is occupying both first and second channels may advertise or indicate the occupancy of both first channel and second channel and identify the occupying user group. For example, the channel occupancy message transmitted via the first channel may indicate: first channel - occupied (occupied by user group 1); second channel-occupied (occupied by user group 1). The same information may be provided on channel status signal for the second channel. In this manner, user devices of user group 1 may be notified that their user group (user group 1) is occupying both first and second channels, and therefore, they (user devices of user group 1) may obtain either of these channels via intra-group cw. Additional channels may be similarly obtained (if necessary to meet needs of user group 1) by the user group 1, and channels may be released by the user group 1, and the channel status information(s) transmitted on any occupied channels may be updated to consider any channels added (or newly occupied by user group 1), and any channels dropped or released for the user group 1.

Likewise, if a user group is underutilizing one or more of its occupied channels, then user devices may be consolidated onto one of the channels, for example, and any remaining channels may be released or transferred to other user groups, e.g., by not transmitting on the channel and allowing the channel to become idle, resulting in an inter-group contention window, for example.

Therefore, at 318 (FIG. 3), user device 1 (a member of user group 1) obtains, via intra-group contention window 217 (FIG. 2), a channel if the channel is occupied by user group 1. For example, an intra-group contention window 217 may be scheduled within (e.g., near or at the end of) each user channel holding period (e.g., 212) to allow other users within an occupying user group to contend for the next user channel holding period (e.g., 214).

User device 1, for example, may successfully contend for the channel during a contention window (cw) 217 (FIG. 2) and thereby obtain at block 318 (FIG. 3) the channel for the 1st user channel holding period 212. Thus, user device 1 may hold or occupy the channel for the current (1st) user channel holding period 212. In this illustrative example, after obtaining the channel, user device 1 may, for example, transmit data or control signals to other user devices via the channel during data blocks 220A and 220B, for example.

If, for example, no channels are currently occupied by user group 1, then user device 1 may obtain another channel (or obtain one of the channels). At 320, the user device 1 may obtain the channel via inter-group contention window 209A (FIG. 2) if the channel is not occupied by user group 1. For example, either the channel is currently free/unoccupied and user device proceeds to contend for the channel via inter-group cw 209, or the channel is currently occupied by another user group, and user device 1 waits for a next inter-group cw 209 to obtain such channel.

At 322, after user device 1 obtains the channel, user device 1 may transmit a channel status information 213A and/or 213B, which may include a channel status signal that indicates a status of the channel (e.g., as either occupied or free) and a channel occupancy message that may include at least a user group ID to identify user group 1 as currently occupying the channel.

At 324, user device 1 may transmit data and/or control signals via one or more data blocks 220 (such as data blocks 220A, 220B). In an example implementation, towards an end of the user channel holding period 212 for user device 1, user device 1 may transmit a control signal to identify resources (e.g., subframes, time slots, time) for an intra-group contention window 217. The contention window 217 may be used to allow other user devices of user group 1 to contend or obtain the channel for a next user channel holding period, for example.

At 326, user device 2 (also a member of user group 1) contends for and obtains the channel via intra-group contention window 217. As a result, user device 2 occupies the channel for the 2nd user channel holding period 214, and may transmit a channel status signal(s) 213C, 213D, and may transmit data or control signals via data blocks 220C, 220D, for example.

As shown in FIG. 2, at the end of the Kth group channel holding period 216, e.g., at the end of data block 220D, the channel becomes free or unoccupied, which creates an inter-group contention window 209B.

At 328, user device 3 (a member of user group 2) determines that the channel is unoccupied, e.g., based on no channel status signal being transmitted on the channel, or detecting a channel status signal indicating status of free, and/or by detecting no signals transmitted on the channel for a minimum or threshold period of time to indicate a free or unoccupied channel at 209B. Alternatively, user device 3 may receive a channel occupancy message transmitted by the cluster head (CH) of the D2D wireless network, which may indicate that this channel is free or unoccupied. At 330, based on this indication that the channel is free, user device 3 may contend and obtain the channel via inter-group contention window 209B.

At 332, user device 3 may transmit channel status information 213E. At 334, user device 3 may also transmit data and control signals within one or more data blocks 220E.

As noted above, a cluster head, which may be one of the user devices within the D2D wireless network, may transit synchronizing signals to allow other user devices to synchronize themselves. In addition, the cluster head (and in some cases other user devices) may provide some types of coordination functions, including inter-group coordination functions.

One example coordination function that may be provided is to acknowledge or confirm user devices that successfully obtained a channel during a contention window. As noted above, a contention window (including an inter-group cw) may include a contention (or request) portion where user devices may transmit channel requests, and a response portion. According to an example implementation, a CH may monitor and receive the channel requests transmitted during a contention portion of an inter-group contention window for different channels. Based on these channel requests on each of the channels, the cluster head may determine which requesting user device successfully obtained the channel for a next group channel holding period based on the contention. The CH may then provide feedback to requesting users (and other devices) indicating which user device successfully obtained the channel for a next group channel holding period, for example. This feedback that acknowledges or identifies a user device and associated user group that successfully obtained the channel, may be provided on the same channel and within the response portion of the contention window, for example. The feedback may also indicate which requesting user devices did not obtain the channel.

In addition, a cluster head may monitor or receive channel requests and/or feedback/responses transmitted during an inter-group contention window to learn or discover which users and user groups are occupying or holding each of the channels. For example, the CH may determine which user device and user group is holding or occupying each channel by monitoring or receiving channel requests during the inter-group cw for each of the channels. Therefore, in addition to transmitting or broadcasting synchronization signals, the CH may also transmit or broadcast occupancy information, e.g., on a control channel known by other user devices, for each channel that identifies a user and/or user group that is holding or occupying each channel, for example. For example, the occupancy information may identify, for each channel, whether the channel is occupied, and if so, identify the user device ID to identify the occupying user device and/or a user group ID to identify the occupying user group, for example. This occupancy information may be used by user devices to determine which channels are free and which channels are occupied, as well as to identify the occupying user group for channels, e.g., so that user devices may first try to obtain channels that are already occupied by their group (e.g., via intra-group cw), and if there are none, then try to obtain another channel or free channel (e.g., via inter-group cw).

Also, as noted above, a user device that is currently occupying/holding a channel may transmit channel status information 213, which may include a channel status signal (indicating whether the channel is occupied or free) and channel occupancy information that identifies the user device and user group that are currently occupying the channel. Therefore, a CH may listen or receive channel status information from different channels to determine which channels are free and which are busy, and to determine which group is occupying each channel. This channel status and channel occupancy information may be transmitted or broadcast by the CH.

Thus, according to an example implementation, the CH may obtain channel status or channel information from at least two sources, including the contention requests and responses (from both intra-group cw and inter-group cw), and channel status information. The CH may then advertise this channel status and channel occupancy information via broadcast channel, for example, to notify other user devices of the channel status and occupying user groups for each of the channels.

Furthermore, an intra-group cw may also include a contention portion (or request portion) and a response portion. A last transmitting user device, e.g., the user device that occupied the last user channel holding period of a group channel holding period, may listen or receive to channel requests during a next inter-group cw may determine which requesting user device successfully obtains the next group channel holding period, and may transmit this channel occupancy information on a response portion of the intra-group cw.

Also, according to another example implementation, a cluster head may also provide some coordination functions. For example, the CH may operate as a gatekeeper, e.g., to detect unauthorized contention or channel requests during intra-group cws from user devices outside the currently occupying user group, for example. For example, if an unauthorized user device (e.g., belonging to a user group other than the currently occupying user group) attempts to obtain the channel via intra-group cw, e.g., by submitting a channel request, the currently occupying user device may send an "unauthorized access" signal over the channel (e.g., to indicate that a user outside the occupying group has attempted access to the channel), and may identify the user device ID and/or user group ID of the offending user device (the unauthorized user device). Also, the CH may send out a signal that cancels the results of the contention, e.g., so as to make the channel free again, schedule an intra-group cw to allow other authorized users to access the channel, or to simply provide a intra-group cw.

According to an example implementation, a cluster head (CH) may control receiving a channel request from one or more requesting user devices during (e.g., a contention portion of) an inter-group contention window for a channel of a device-to-device wireless network, selecting one of the requesting user devices to obtain the channel for a next channel holding period, and controlling sending one or more responses (e.g., during a response portion of the inter-group cw) to identify the user device that was selected to obtain the channel.

According to an example implementation, the controlling receiving may include controlling receiving, by the CH (cluster head) from a first user device, a channel request that is a first received channel request within an inter-group contention window for a channel of a device-to-device wireless network, and the selecting may include selecting the first user device to obtain the channel. In this manner, for example, the CH may simply receive at least one channel request, and the CH may select the user device that sends the first successful channel request to obtain the channel for a next group channel holding period.

According to an example implementation, the channel request from one or more requesting user devices includes one or more of the following: information identifying the requesting user device, information identifying a user group to which the requesting user device is a member, a prioritization coefficient assigned to the requesting user device based on channel conditions for the requesting user device, a quality of service (QoS) assigned to the requesting user device, a transmission priority for the requesting user device, and a buffer status for the requesting user device.

According to an example implementation, the CH may alternatively select one of the requesting user devices to obtain the channel for a next channel holding period based on one or more of the following criteria: a prioritization coefficient assigned to the requesting user device based on channel conditions for the requesting user device, a quality of service (QoS) assigned to the requesting user device, a transmission priority for the requesting user device, and a buffer status for the requesting user device.

According to another example implementation, a CH may perform a method including controlling receiving at least a first channel request from a first requesting user device, the first channel request being received first among one or more channel requests that are received during a contention portion of an inter-group contention window for a channel of a device-to-device wireless network, and controlling sending a response during a response portion of the inter-group contention window indicating that the first requesting user device was successful in obtaining the channel.

Additional optional techniques may be employed to improve the efficiency of channel/resource usage. These techniques may be used to improve the usage of a user channel holding period and/or to improve a usage of a group channel holding period. A first technique allows transfer of a user channel holding period to another user device, e.g., to allow an unused remaining portion of a user channel holding period to be used by another user device. Similarly, using this first technique, a user group (or a last occupying user device of the user group) that is occupying a group channel holding period may use this technique to allow another user group (or a user of another user group) to obtain a remaining unused portion of a group channel holding period.

A second technique may be used to allow a currently holding (occupying) user device of a user channel holding period to request an extension of the current user channel holding period to allow the user device that is holding a current user channel holding period to continue occupying or holding the channel for the next user channel holding period without going through contention, for example. For example, a user device that currently holds or occupies a current user channel holding period, upon request, may continue holding or occupying the channel of next user channel holding period, e.g., if the current holder has further data to send that cannot be accommodated in the current channel holding period and no other user devices have a need for the channel, as an example. This second technique may be applied to allow a user group that is holding or occupying the current group channel holding period may request and obtain a next group channel holding period, e.g., if users from other user groups do not need or request the channel. Some illustrative example implementations of these techniques will be briefly described.

According to an example implementation of the first technique, a method may include controlling sending, by a first user device via a wireless channel, a channel transfer notification to one or more other user devices of a device-to-device (D2D) or proximity services (ProSe) user group to indicate that a wireless channel is transferrable from the first user device to another user device of the user group before an end of a current channel holding period, controlling receiving, by the first user device via the wireless channel from one or more of the other user devices of the user group, a channel transfer request, the channel transfer request comprising information identifying a requesting user device, selecting, among the other user devices by the first user device, a second user device to receive a transfer of the channel for a remaining portion of a current channel holding period, and controlling sending, by the first user device via the wireless channel, a channel transfer response that identifies the selected second user device to which the channel is transferred for a remaining portion of the current channel holding period. This example may be similarly applied to a transfer a remaining portion of a group channel holding period from a first user group to a second user group.

According to an example implementation of the second technique, a method includes controlling sending, by a first user device via a wireless channel during a current channel holding period, a channel holding period extension request to one or more other user devices of a device-to-device (D2D) user group to request that the first user device continue holding of the wireless channel for a next channel holding period, determining if a channel holding period extension response has been received from at least one of the other user devices of the D2D user group, selecting, by the first user device, the first user device to hold the wireless channel for the next channel holding period if no channel holding period extension responses have been received, otherwise, if one or more channel holding period extension responses have been received from other user devices, then the first user device selecting either the first user device or one of the other user devices that sent a channel holding period extension response to hold the wireless channel for the next channel holding period, and controlling sending, by the first user device via the wireless channel, a channel holding period extension confirmation that identifies the selected user device to hold the wireless channel for the next channel holding period. This technique may be applied to both user channel holding period and group channel holding period.

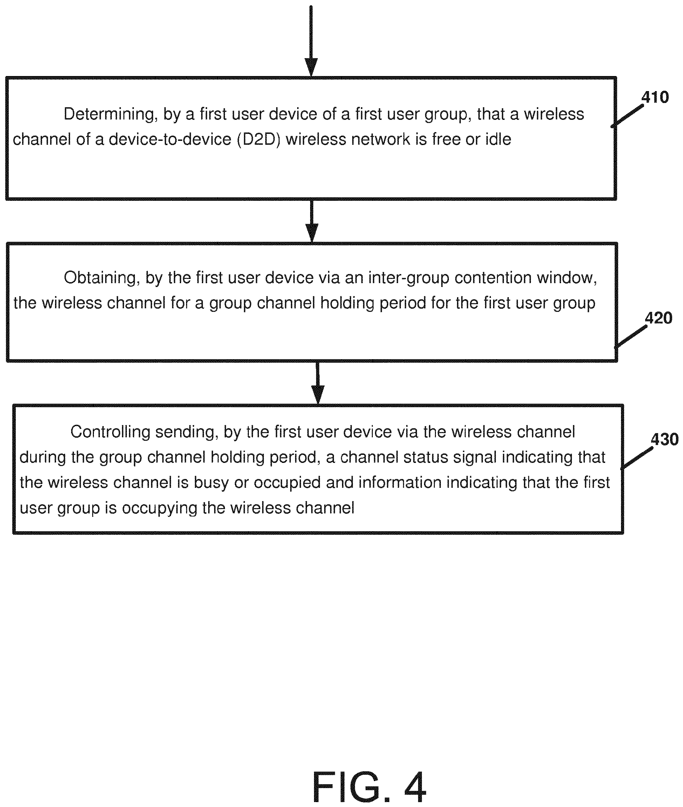

FIG. 4 is a flow chart illustrating operation of a user device according to an example implementation. Operation 410 includes determining, by a first user device of a first user group, that a wireless channel of a device-to-device (D2D) wireless network is free or idle. Operation 420 includes obtaining, by the first user device via an inter-group contention window, the wireless channel for a group channel holding period for the first user group. And, operation 430 includes controlling sending, by the first user device via the wireless channel during the group channel holding period, a channel status signal indicating that the wireless channel is busy or occupied and information indicating that the first user group is occupying the wireless channel.

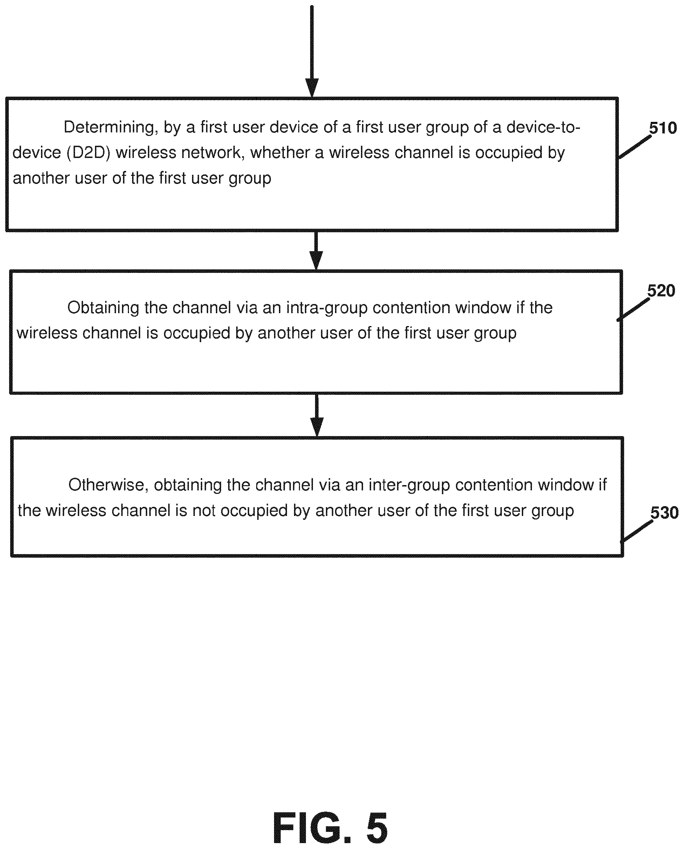

FIG. 5 is a flow chart illustrating operation of a user device according to an example implementation. Operation 510 includes determining, by a first user device of a first user group of a device-to-device (D2D) wireless network, whether a wireless channel is occupied by another user of the first user group. Operation 520 includes obtaining the channel via an intra-group contention window if the wireless channel is occupied by another user of the first user group. Operation 530 includes otherwise, obtaining the channel via an inter-group contention window if the wireless channel is not occupied by another user of the first user group.

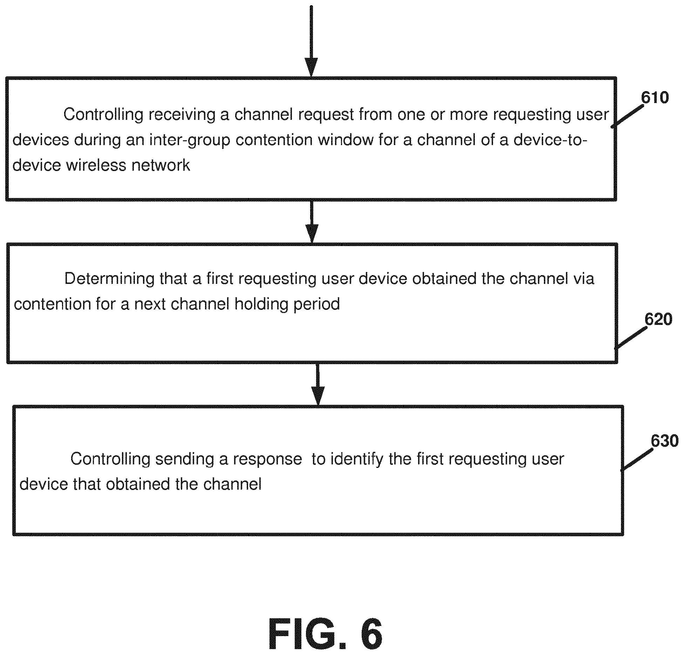

FIG. 6 is a flow chart illustrating operation of a user device according to an example implementation. Operation 610 may include controlling receiving a channel request from one or more requesting user devices during an inter-group contention window for a channel of a device-to-device wireless network. Operation 620 may include determining that a first requesting user device obtained the channel via contention for a next channel holding period. And, operation 630 may include controlling sending a response to identify the first requesting user device as obtaining the channel.

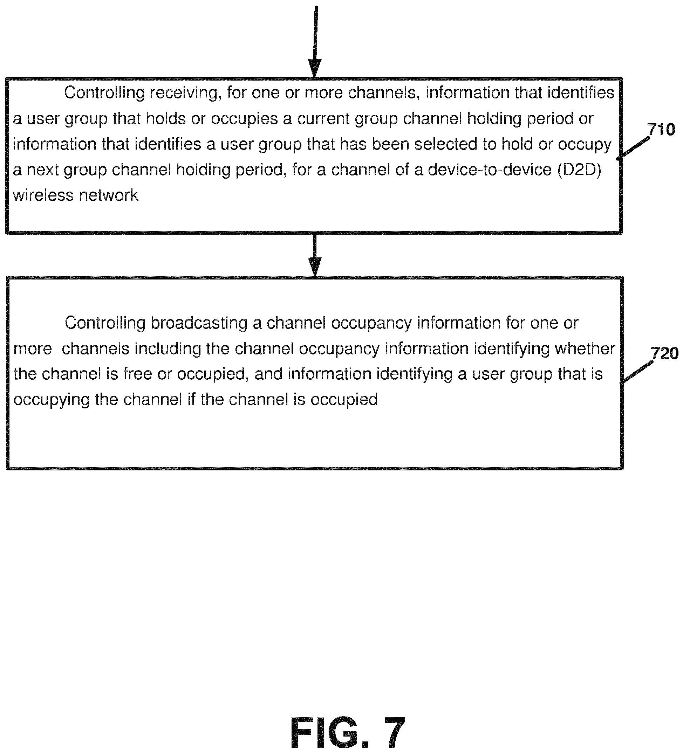

FIG. 7 is a flow chart illustrating operation of a user device according to an example implementation. Operation 710 includes controlling receiving, for one or more channels, information that identifies a user group that holds or occupies a current group channel holding period or information that identifies a user group that has been selected to hold or occupy a next group channel holding period, for a channel of a device-to-device (D2D) wireless network. Operation 720 includes controlling broadcasting a channel occupancy information for one or more channels including the channel occupancy information identifying whether the channel is free or occupied, and information identifying a user group that is occupying the channel if the channel is occupied.

An embodiment provides an apparatus which may be a user device or any other apparatus capable to carry out processes described above in relation to Figures 4 to 7. It should be appreciated that an apparatus may include or otherwise be in communication with a controller, one or more processors or other entities capable of carrying out operations according to the embodiments described by means of Figures 4 to 7. It should be understood that each block of the flowchart of Figures 4 to 7 and any combination thereof may be implemented by various means or their combinations, such as hardware, software, firmware, one or more processors and/or circuitry.

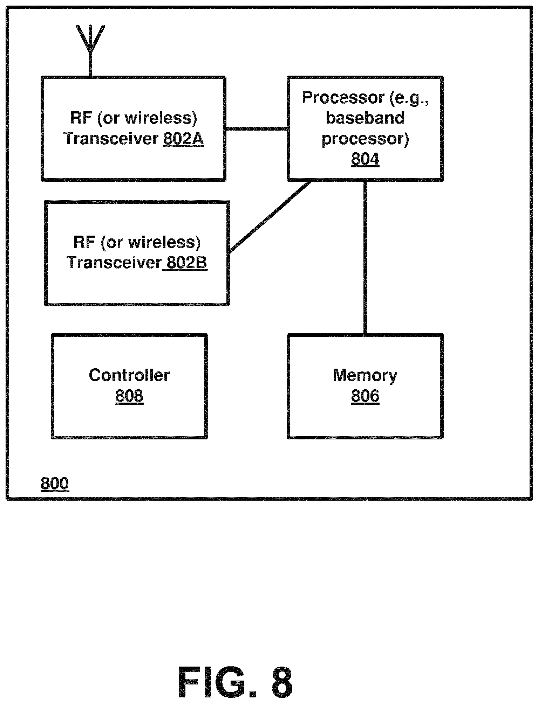

FIG. 8 is a block diagram of a wireless station (e.g., BS or user device) 800 according to an example implementation. The wireless station 800 may include, for example, two RF (radio frequency) or wireless transceivers 802A, 802B, where each wireless transceiver includes a transmitter to transmit signals and a receiver to receive signals. The wireless station also includes a processor or control unit/entity (controller) 804 to execute instructions or software and control transmission and receptions of signals, and a memory 806 to store data and/or instructions.

Processor 804 may also make decisions or determinations, generate frames, packets or messages for transmission, decode received frames or messages for further processing, and other tasks or functions described herein. Processor 804, which may be a baseband processor, for example, may generate messages, packets, frames or other signals for transmission via wireless transceiver 802. Processor 804 may control transmission of signals or messages over a wireless network, and may control the reception of signals or messages, etc., via a wireless network (e.g., after being downconverted by wireless transceiver 802, for example). Processor 804 may be programmable and capable of executing software or other instructions stored in memory or on other computer media to perform the various tasks and functions described above, such as one or more of the tasks or methods described above. Processor 804 may be (or may include), for example, hardware, programmable logic, a programmable processor that executes software or firmware, and/or any combination of these. Using other terminology, processor 804 and transceiver 802 together may be considered as a wireless transmitter/receiver system, for example.

In addition, referring to FIG. 8, a controller (or processor) 808 may execute software and instructions, and may provide overall control for the station 800, and may provide control for other systems not shown in FIG. 8, such as controlling input/output devices (e.g., display, keypad), and/or may execute software for one or more applications that may be provided on wireless station 800, such as, for example, an email program, audio/video applications, a word processor, a Voice over IP application, or other application or software.

In addition, a storage medium may be provided that includes stored instructions, which when executed by a controller or processor may result in the processor 804, or other controller or processor, performing one or more of the functions or tasks described above.

According to another example implementation, RF or wireless transceiver (s) 802A/802B may receive signals or data and/or transmit or send signals or data. Processor 804 may control the RF or wireless transceiver 802A or 802B to receive, send, broadcast or transmit signals or data.

Implementations of the various techniques described herein may be implemented in digital electronic circuitry, or in computer hardware, firmware, software, or in combinations of them. Implementations may implemented as a computer program product, i.e., a computer program or computer program portions tangibly embodied in an information carrier, e.g., in a machine-readable storage device or in a propagated signal, for execution by, or to control the operation of, a data processing apparatus, e.g., a programmable processor, a computer, or multiple computers. Implementations of the various techniques may also include implementations provided via transitory signals or media, and/or programs and/or software implementations that are downloadable via the Internet or other network(s), either wired networks and/or wireless networks. In addition, implementations may be provided via machine type communications (MTC), and also via an Internet of Things (IOT).

Further more, implementations of the various techniques described herein may use a cyber-physical system (CPS) (a system of collaborating computational elements controlling physical entities). CPS may enable the implementation and exploitation of massive amounts of interconnected ICT devices (sensors, actuators, processors microcontrollers, etc.) embedded in physical objects at different locations. Mobile cyber physical systems, in which the physical system in question has inherent mobility, are a subcategory of cyber-physical systems. Examples of mobile physical systems include mobile robotics and electronics transported by humans or animals. The rise in popularity of smartphones has increased interest in the area of mobile cyber-physical systems. Therefore, various implementations of techniques described herein may be provided via one or more of these technologies.

A computer program, such as the computer program(s) described above, can be written in any form of programming language, including compiled or interpreted languages, and can be deployed in any form, including as a stand-alone program or as a module, component, subroutine, or other unit or part of it suitable for use in a computing environment. A computer program can be deployed to be executed on one computer or on multiple computers at one site or distributed across multiple sites and interconnected by a communication network.

Method steps may be performed by one or more programmable processors executing a computer program or computer program portions to perform functions by operating on input data and generating output. Method steps also may be performed by, and an apparatus may be implemented as, special purpose logic circuitry, e.g., an FPGA (field programmable gate array) or an ASIC (application-specific integrated circuit).

Processors suitable for the execution of a computer program include, by way of example, both general and special purpose microprocessors, and any one or more processors of any kind of digital computer, chip or chipset. Generally, a processor will receive instructions and data from a read-only memory or a random access memory or both. Elements of a computer may include at least one processor for executing instructions and one or more memory devices for storing instructions and data. Generally, a computer also may include, or be operatively coupled to receive data from or transfer data to, or both, one or more mass storage devices for storing data, e.g., magnetic, magneto-optical disks, or optical disks. Information carriers suitable for embodying computer program instructions and data include all forms of non-volatile memory, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory may be supplemented by, or incorporated in, special purpose logic circuitry.

To provide for interaction with a user, implementations may be implemented on a computer having a display device, e.g., a cathode ray tube (CRT) or liquid crystal display (LCD) monitor, for displaying information to the user and a user interface, such as a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input.

Implementations may be implemented in a computing system that includes a back-end component, e.g., as a data server, or that includes a middleware component, e.g., an application server, or that includes a front-end component, e.g., a client computer having a graphical user interface or a Web browser through which a user can interact with an implementation, or any combination of such back-end, middleware, or front-end components. Components may be interconnected by any form or medium of digital data communication, e.g., a communication network. Examples of communication networks include a local area network (LAN) and a wide area network (WAN), e.g., the Internet.

## Claims

1. An apparatus comprising:
means (802, 804, 806) for determining, by a first user device of a first user group, that a first wireless channel of a device-to-device, D2D, wireless network is occupied by another user of the first user group;
means (802) for obtaining, by the first user device via an intra-group contention window, the first wireless channel for at least one subsequent user holding period;
means (802, 804, 806) for determining , by the first user device of the first user group, that a second wireless channel of a device-to-device, D2D, wireless network is free or unoccupied; means (802) for obtaining, by the first user device via an inter-group contention window, the second wireless channel for a group channel holding period for the first user group, and
means (802, 804, 806) for controlling sending, by the first user device via the wireless channel during the group channel holding period, channel status information indicating that the first and/or second wireless channel is busy or occupied and, when the second wireless channel is obtained, information indicating that the first user group is occupying the second wireless channel.

2. The apparatus of claim 1 wherein the determining comprises at least one of the following:
determining that the first and/or second wireless channel is free or unoccupied based on information transmitted on the respective wireless channel indicating a status as free or unoccupied; or
determining that the wireless channel is free or unoccupied based on an absence of channel status information on the first and/or second channel that indicates a busy or occupied channel.

3. The apparatus of claim 1 wherein the group channel holding period for the first user group comprises a plurality of user channel holding periods including at least one user channel holding period for the first user device.

4. The apparatus of claim 1, wherein the intra-group contention window and/or the inter-group contention window comprises a contention portion for submitting channel or contention requests and a response portions for providing a response indicating which requesting user device obtained the requested channel.

5. The apparatus of claim 1, wherein the intra-group contention window is used to allow the first user device to contend the wireless channel during a group channel holding period and at the end of the group channel holding period, the wireless channel becomes contendable via an inter-group contention window.

6. A method comprising:
determining (316), by a first user device of a first user group, that a first wireless channel of a device-to-device, D2D, wireless network is occupied by another user of the first user group, and
obtaining (318), by the first user device via an intra-group contention window, the first wireless channel for at least one subsequent user holding period; and/or determining (320, 328, 410), by the first user device of the first user group, that a second wireless channel of a device-to-device, D2D, wireless network is free or unoccupied, and
obtaining (320, 330, 420), by the first user device via an inter-group contention window, the second wireless channel for a group channel holding period for the first user group; and
controlling sending (213A, 213C, 332, 430), by the first user device via the wireless channel during the group channel holding period, channel status information indicating that the first and/or second wireless channel is busy or occupied and when the second wireless channel is obtained, information indicating that the first user group is occupying the second wireless channel.

7. The method of claim 6 wherein the determining comprises at least one of the following:
determining that the first and/or second wireless channel is free or unoccupied based on information transmitted on the respective wireless channel indicating a status as free or unoccupied; or
determining that the first and/or second wireless channel is free or unoccupied based on an absence of channel status information that indicates a busy or occupied channel.

8. The method of claim 6 wherein the group channel holding period for the first user group comprises a plurality of user channel holding periods including at least one user channel holding period for the first user device.

9. The method of claim 6, wherein the intra-group contention window and/or the inter-group contention window comprises a contention portion for submitting channel or contention requests and a response portions for providing a response indicating which requesting user device obtained the requested channel.

10. The apparatus of claim 6, wherein the intra-group contention window is used to allow the first user device to contend the wireless channel during a group channel holding period and at the end of the group channel holding period, the wireless channel becomes contendable via an inter-group contention window.

11. A computer program product for a computer, comprising software code portions for performing, when said product is run on the computer at least the following:
determining (316), by a first user device of a first user group, that a first wireless channel of a device-to-device, D2D, wireless network is occupied by another user of the first user group, and
obtaining (318), by the first user device via an intra-group contention window, the first wireless channel for at least one subsequent user holding period; and/or
determining (320, 328, 410), by the first user device of the first user group, that a second wireless channel of a device-to-device, D2D, wireless network is free or unoccupied, and
obtaining (320, 330, 420), by the first user device via the inter-group contention window, the second wireless channel for a group channel holding period for the first user group; and
controlling sending (213A, 213C, 332, 430), by the first user device via the wireless channel during the group channel holding period, channel status information indicating that the first and/or second wireless channel is busy or occupied and, when the second wireless channel is obtained, information indicating that the first user group is occupying the second wireless channel.

## Patentansprüche

1. Einrichtung, die Folgendes umfasst:
Mittel (802, 804, 806) zum Bestimmen durch eine erste Benutzervorrichtung einer ersten Benutzergruppe, dass ein erster drahtloser Kanal eines drahtlosen Vorrichtung-zu-Vorrichtung(D2D)-Netzwerks durch einen anderen Benutzer der ersten Benutzergruppe belegt ist;
ein Mittel (802) zum Erhalten des ersten drahtlosen Kanals für mindestens eine nachfolgende Benutzerhalteperiode via ein intragruppales Konkurrenzfenster durch die erste Benutzervorrichtung;
Mittel (802, 804, 806) zum Bestimmen durch die erste Benutzervorrichtung der ersten Benutzergruppe, dass ein zweiter drahtloser Kanal eines drahtlosen Vorrichtung-zu-Vorrichtung(D2D)-Netzwerks frei oder unbelegt ist;
ein Mittel (802) zum Erhalten des zweiten drahtlosen Kanals für eine Gruppenkanalhalteperiode via ein intergruppales Konkurrenzfenster durch die erste Benutzervorrichtung für die erste Benutzergruppe und
Mittel (802, 804, 806) zum Steuern des Sendens von Kanalstatusinformationen, die anzeigen, dass der erste und/oder der zweite drahtlose Kanal besetzt oder belegt ist, und, wenn der zweite drahtlose Kanal erhalten wird, von Informationen, die anzeigen, dass die erste Benutzergruppe den zweiten drahtlosen Kanal belegt, durch die erste Benutzervorrichtung via den drahtlosen Kanal während der Gruppenkanalhalteperiode.

2. Einrichtung nach Anspruch 1, wobei das Bestimmen mindestens eines von Folgendem umfasst:
Bestimmen auf Basis von Informationen, die auf dem jeweiligen drahtlosen Kanal übertragen werden und einen Status als frei oder unbelegt anzeigen, dass der erste und/oder der zweite drahtlose Kanal frei oder unbelegt ist; oder
Bestimmen auf Basis eines Fehlens von Kanalstatusinformationen auf dem ersten und/oder dem zweiten Kanal, die einen besetzten oder belegten Kanal anzeigen, dass der drahtlose Kanal frei oder unbelegt ist.

3. Einrichtung nach Anspruch 1, wobei die Gruppenkanalhalteperiode für die erste Benutzergruppe eine Vielzahl von Benutzerkanalhalteperioden umfasst, die mindestens eine Benutzerkanalhalteperiode für die erste Benutzervorrichtung beinhalten.

4. Einrichtung nach Anspruch 1, wobei das intragruppale Konkurrenzfenster und/oder das intergruppale Konkurrenzfenster einen Konkurrenzabschnitt zum Einreichen von Kanal- oder Konkurrenzanforderungen und einen Antwortabschnitt zum Bereitstellen einer Antwort, die anzeigt, welche anfordernde Benutzervorrichtung den angeforderten Kanal erhalten hat, umfasst.

5. Einrichtung nach Anspruch 1, wobei das intragruppale Konkurrenzfenster verwendet wird, um es der ersten Benutzervorrichtung zu erlauben, während einer Gruppenkanalhalteperiode um den drahtlosen Kanal zu konkurrieren, und am Ende der Gruppenkanalhalteperiode via ein intergruppales Konkurrenzfenster um den drahtlosen Kanal konkurriert werden kann.

6. Verfahren, das Folgendes umfasst:
Bestimmen (316) durch eine erste Benutzervorrichtung einer ersten Benutzergruppe, dass ein erster drahtloser Kanal eines drahtlosen Vorrichtung-zu-Vorrichtung(D2D)-Netzwerks durch einen anderen Benutzer der ersten Benutzergruppe belegt ist, und
Erhalten (318) des ersten drahtlosen Kanals für mindestens eine nachfolgende Benutzerhalteperiode via ein intragruppales Konkurrenzfenster durch die erste Benutzervorrichtung und/oder
Bestimmen (320, 328, 410) durch die erste Benutzervorrichtung der ersten Benutzergruppe, dass ein zweiter drahtloser Kanal eines drahtlosen Vorrichtung-zu-Vorrichtung(D2D)-Netzwerks frei oder unbelegt ist, und
Erhalten (320, 330, 420) des zweiten drahtlosen Kanals für eine Gruppenkanalhalteperiode via ein intergruppales Konkurrenzfenster durch die erste Benutzervorrichtung für die erste Benutzergruppe und
Steuern des Sendens (213A, 213C, 332, 430) von Kanalstatusinformationen, die anzeigen, dass der erste und/oder der zweite drahtlose Kanal besetzt oder belegt ist, und, wenn der zweite drahtlose Kanal erhalten wird, von Informationen, die anzeigen, dass die erste Benutzergruppe den zweiten drahtlosen Kanal belegt, durch die erste Benutzervorrichtung via den drahtlosen Kanal während der Gruppenkanalhalteperiode.

7. Verfahren nach Anspruch 6, wobei das Bestimmen mindestens eines von Folgendem umfasst:
Bestimmen auf Basis von Informationen, die auf dem jeweiligen drahtlosen Kanal übertragen werden und einen Status als frei oder unbelegt anzeigen, dass der erste und/oder der zweite drahtlose Kanal frei oder unbelegt ist; oder
Bestimmen auf Basis eines Fehlens von Kanalstatusinformationen, die einen besetzten oder belegten Kanal anzeigen, dass der erste und/oder der zweite drahtlose Kanal frei oder unbelegt ist.

8. Verfahren nach Anspruch 6, wobei die Gruppenkanalhalteperiode für die erste Benutzergruppe eine Vielzahl von Benutzerkanalhalteperioden umfasst, die mindestens eine Benutzerkanalhalteperiode für die erste Benutzervorrichtung beinhalten.

9. Verfahren nach Anspruch 6, wobei das intragruppale Konkurrenzfenster und/oder das intergruppale Konkurrenzfenster einen Konkurrenzabschnitt zum Einreichen von Kanal- oder Konkurrenzanforderungen und einen Antwortabschnitte zum Bereitstellen einer Antwort, die anzeigt, welche anfordernde Benutzervorrichtung den angeforderten Kanal erhalten hat, umfasst.

10. Einrichtung nach Anspruch 6, wobei das intragruppale Konkurrenzfenster verwendet wird, um es der ersten Benutzervorrichtung zu erlauben, während einer Gruppenkanalhalteperiode um den drahtlosen Kanal zu konkurrieren, und am Ende der Gruppenkanalhalteperiode via ein intergruppales Konkurrenzfenster um den drahtlosen Kanal konkurriert werden kann.

11. Computerprogrammprodukt für einen Computer, das Softwarecodeabschnitte zum Durchführen von mindestens Folgendem umfasst, wenn das Produkt auf dem Computer ausgeführt wird:
Bestimmen (316) durch eine erste Benutzervorrichtung einer ersten Benutzergruppe, dass ein erster drahtloser Kanal eines drahtlosen Vorrichtung-zu-Vorrichtung(D2D)-Netzwerks durch einen anderen Benutzer der ersten Benutzergruppe belegt ist, und
Erhalten (318) des ersten drahtlosen Kanals für mindestens eine nachfolgende Benutzerhalteperiode via ein intragruppales Konkurrenzfenster durch die erste Benutzervorrichtung und/oder
Bestimmen (320, 328, 410) durch die erste Benutzervorrichtung der ersten Benutzergruppe, dass ein zweiter drahtloser Kanal eines drahtlosen Vorrichtung-zu-Vorrichtung(D2D)-Netzwerks frei oder unbelegt ist, und
Erhalten (320, 330, 420) des zweiten drahtlosen Kanals für eine Gruppenkanalhalteperiode via das intergruppale Konkurrenzfenster durch die erste Benutzervorrichtung für die erste Benutzergruppe und
Steuern des Sendens (213A, 213C, 332, 430) von Kanalstatusinformationen, die anzeigen, dass der erste und/oder der zweite drahtlose Kanal besetzt oder belegt ist, und, wenn der zweite drahtlose Kanal erhalten wird, von Informationen, die anzeigen, dass die erste Benutzergruppe den zweiten drahtlosen Kanal belegt, durch die erste Benutzervorrichtung via den drahtlosen Kanal während der Gruppenkanalhalteperiode.

## Revendications

1. Appareil comprenant :
des moyens (802, 804, 806) destinés à déterminer, par un premier dispositif utilisateur d'un premier groupe d'utilisateurs, qu'un premier canal sans fil d'un réseau sans fil de communication entre dispositifs, D2D, est occupé par un autre utilisateur du premier groupe d'utilisateurs ;
des moyens (802) destinés à obtenir, par le premier dispositif utilisateur par le biais d'une fenêtre de contention intra-groupe, le premier canal sans fil pour au moins une période de maintien utilisateur subséquente ;
des moyens (802, 804, 806) destinés à déterminer, par le premier dispositif utilisateur du premier groupe d'utilisateurs, qu'un deuxième canal sans fil d'un réseau sans fil de communication entre dispositifs, D2D, est libre ou inoccupé ;
des moyens (802) destinés à obtenir, par le premier dispositif utilisateur par le biais d'une fenêtre de contention inter-groupe, le deuxième canal sans fil pour une période de maintien de canal de groupe pour le premier groupe d'utilisateurs, et
des moyens (802, 804, 806) destinés à contrôler l'envoi, par le premier dispositif utilisateur par le biais du canal sans fil durant la période de maintien de canal de groupe, d'informations d'état de canal indiquant que le premier et/ou le deuxième canal sans fil est indisponible ou occupé et, lorsque le deuxième canal sans fil est obtenu, d'informations indiquant que le premier groupe d'utilisateurs occupe le deuxième canal sans fil.

2. Appareil selon la revendication 1, dans lequel l'étape de détermination comprend au moins une des actions suivantes :
la détermination que le premier et/ou le deuxième canal sans fil est libre ou inoccupé sur la base d'informations transmises sur le canal sans fil respectif indiquant un état comme libre ou inoccupé ; ou
la détermination que le canal sans fil est libre ou inoccupé sur la base d'une absence d'informations d'état de canal sur le premier et/ou le deuxième canal qui indiquent un canal indisponible ou occupé.

3. Appareil selon la revendication 1, dans lequel la période de maintien de canal de groupe pour le premier groupe d'utilisateurs comprend une pluralité de périodes de maintien de canal utilisateur comportant au moins une période de maintien de canal utilisateur pour le premier dispositif utilisateur.

4. Appareil selon la revendication 1, dans lequel la fenêtre de contention intra-groupe et/ou la fenêtre de contention inter-groupe comprend une partie de contention destinée à soumettre des requêtes de canal ou de contention et une partie de réponse destinée à fournir une réponse indiquant quel dispositif utilisateur demandeur a obtenu le canal demandé.

5. Appareil selon la revendication 1, dans lequel la fenêtre de contention intra-groupe est utilisée pour permettre au premier dispositif utilisateur d'entrer en conflit pour l'accès au canal sans fil durant une période de maintien de canal de groupe et à la fin de la période de maintien de canal de groupe, le canal sans fil devient disponible pour un conflit d'accès par le biais d'une fenêtre de contention inter-groupe.

6. Procédé comprenant :
la détermination (316), par un premier dispositif utilisateur d'un premier groupe d'utilisateurs, qu'un premier canal sans fil d'un réseau sans fil de communication entre dispositifs, D2D, est occupé par un autre utilisateur du premier groupe d'utilisateurs, et
l'obtention (318), par le premier dispositif utilisateur par le biais d'une fenêtre de contention intra-groupe, du premier canal sans fil pour au moins une période de maintien utilisateur subséquente ; et/ou
la détermination (320, 328, 410), par le premier dispositif utilisateur du premier groupe d'utilisateurs, qu'un deuxième canal sans fil d'un réseau sans fil de communication entre dispositifs, D2D, est libre ou inoccupé, et
l'obtention (320, 330 420), par le premier dispositif utilisateur par le biais d'une fenêtre de contention inter-groupe, du deuxième canal sans fil pour une période de maintien de canal de groupe pour le premier groupe d'utilisateurs ; et
le contrôle de l'envoi (213A, 213C, 332, 430), par le premier dispositif utilisateur par le biais du canal sans fil durant la période de maintien de canal de groupe, d'informations d'état de canal indiquant que le premier et/ou le deuxième canal sans fil est indisponible ou occupé et, lorsque le deuxième canal sans fil est obtenu, d'informations indiquant que le premier groupe d'utilisateurs occupe le deuxième canal sans fil.

7. Procédé selon la revendication 6, dans lequel l'étape de détermination comprend au moins une des actions suivantes :
la détermination que le premier et/ou le deuxième canal sans fil est libre ou inoccupé sur la base d'informations transmises sur le canal sans fil respectif indiquant un état comme libre ou inoccupé ; ou
la détermination que le premier et/ou le deuxième canal sans fil est libre ou inoccupé sur la base d'une absence d'informations d'état de canal qui indiquent un canal indisponible ou occupé.

8. Procédé selon la revendication 6, dans lequel la période de maintien de canal de groupe pour le premier groupe d'utilisateurs comprend une pluralité de périodes de maintien de canal utilisateur comportant au moins une période de maintien de canal utilisateur pour le premier dispositif utilisateur.

9. Procédé selon la revendication 6, dans lequel la fenêtre de contention intra-groupe et/ou la fenêtre de contention inter-groupe comprend une partie de contention destinée à soumettre des requêtes de canal ou de contention et une partie de réponse destinée à fournir une réponse indiquant quel dispositif utilisateur demandeur a obtenu le canal demandé.

10. Appareil selon la revendication 6, dans lequel la fenêtre de contention intra-groupe est utilisée pour permettre au premier dispositif utilisateur d'entrer en conflit pour l'accès au canal sans fil durant une période de maintien de canal de groupe et à la fin de la période de maintien de canal de groupe, le canal sans fil devient disponible pour un conflit d'accès par le biais d'une fenêtre de contention inter-groupe.

11. Produit programme d'ordinateur pour un ordinateur, comprenant des parties de code logiciel destinées à mettre en œuvre, lorsque ledit produit est exécuté sur l'ordinateur, au moins les actions suivantes :
la détermination (316), par un premier dispositif utilisateur d'un premier groupe d'utilisateurs, qu'un premier canal sans fil d'un réseau sans fil de communication entre dispositifs, D2D, est occupé par un autre utilisateur du premier groupe d'utilisateurs, et
l'obtention (318), par le premier dispositif utilisateur par le biais d'une fenêtre de contention intra-groupe, du premier canal sans fil pour au moins une période de maintien utilisateur subséquente ; et/ou
la détermination (320, 328, 410), par le premier dispositif utilisateur du premier groupe d'utilisateurs, qu'un deuxième canal sans fil d'un réseau sans fil de communication entre dispositifs, D2D, est libre ou inoccupé, et
l'obtention (320, 330 420), par le premier dispositif utilisateur par le biais de la fenêtre de contention inter-groupe, du deuxième canal sans fil pour une période de maintien de canal de groupe pour le premier groupe d'utilisateurs ; et
le contrôle de l'envoi (213A, 213C, 332, 430), par le premier dispositif utilisateur par le biais du canal sans fil durant la période de maintien de canal de groupe, d'informations d'état de canal indiquant que le premier et/ou le deuxième canal sans fil est indisponible ou occupé et, lorsque le deuxième canal sans fil est obtenu, d'informations indiquant que le premier groupe d'utilisateurs occupe le deuxième canal sans fil.
